# EUROPEAN PATENT APPLICATION

(11) **EP 3 937 110 A1**
(43) Date of publication of application: **12.01.2022**
(21) Application number: 19917920.1
(22) Date of filing: 27.03.2019
(51) Int. Cl.: G06Q 30/06, G06Q 20/40, G06Q 20/38, G06Q 50/18, H04L 9/06

(54) **INTELLECTUAL PROPERTY RIGHT TRADE SYSTEM USING BLOCKCHAIN, AND OPERATING METHOD THEREFOR**

(30) Priority: 05.03.2019 KR 20190025393
(71) Applicant: Hessegg, Inc., Seoul 05855 (KR)
(72) Inventor: SON, In Sik, Seongnam-Si, Gyeonggi-do 13614 (KR)
(74) Representative: FRKelly
(86) International application number: PCT/KR2019/003578
(87) International publication number: WO 2020/179963

(57) **Abstract**

The present invention provides an intellectual property trade system using a block chain, characterized in that it includes at least one trader terminal connected to a block chain network in which trade information on at least one intellectual property rights subject to a trade is stored; and a control server comprising a trade intermediary unit that mediates trades on the intellectual property rights and stores blocks including trade information on the intellectual property rights in the block chain network and a currency issuing unit that issues a preset quantity of cryptocurrency at a unit price determined by a person who has the authority to sell or lease the intellectual property rights and a currency trade brokerage unit that brokers trades for the issued cryptocurrency and a revenue distribution unit for distributing and calculating the revenue generated from the intellectual property rights that is the target of the trade by the number of holdings compared to the total number of issued cryptocurrencies to the holders of the cryptocurrency.

## Description

### [Technical Field]

The present invention relates to an intellectual property trade system and an operating method thereof, and more particularly, to an intellectual property trade system having security and stability using a block chain rather than a trade using an existing relay server, and an operating method thereof.

### [Background Art]

In general, intellectual property rights can be broadly divided into copyrights related to cultural creations such as literature, science, and art, industrial creations such as inventions, utility, and designs, and industrial property rights related to business signs such as trademarks.

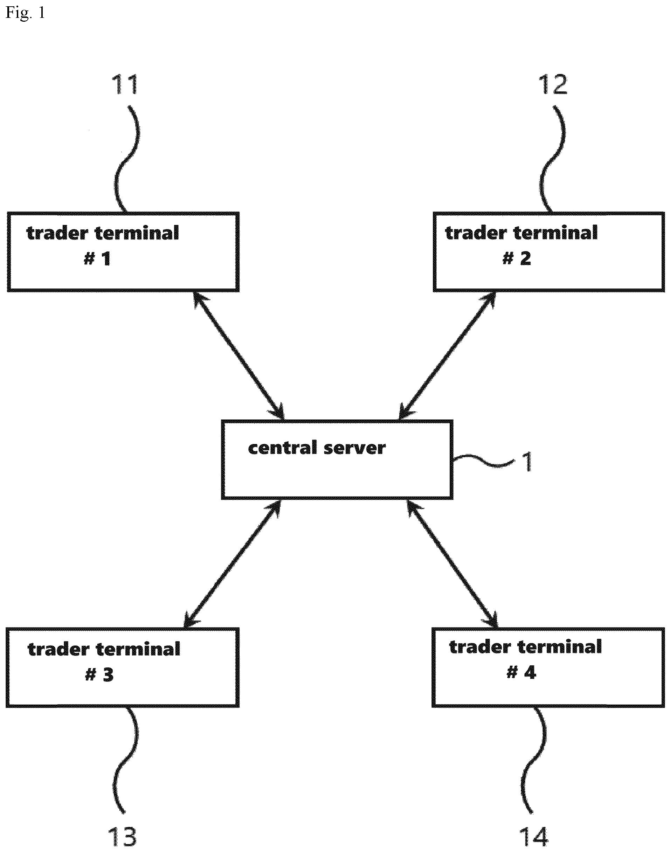

Recently, such intellectual property rights are transferred or leased in the form of e-commerce, but in general, as shown in FIG. 1, the central server 1 provides a trading platform, and a plurality of trader terminals (11 to 14) access the central server 1 and input and upload information on intellectual property rights to be traded, or check previously uploaded intellectual property rights and approve the trade, so that a trade can be established.

When e-commerce for intellectual property rights is operated in a centralized manner, there is a problem in that trade fees increase due to an increase in operating costs, and there is a problem with opportunities to enjoy various trade services by being dependent on specific e-commerce services. There are problems that can cause restrictions.

In addition, the centralized e-commerce has problems such as data forgery, hacker hacking risk, opaque trades, and trade history management problems.

### [Prior art literature]

### [Patent Literature]

(Patent Document 1) Japanese Patent Publication No. 2019-023843 (published date: 2019.02.14.)
(Patent Document 2) Korean Patent Publication No. 10-2018-0008850 (published on: January 24, 2018)
(Patent Document 3) Korean Patent Publication No. 10-2011-0016173 (published on: February 17, 2011)

### [Disclosure]

### [Technical Problem]

An object of the present invention is to provide an intellectual property trade system and an operating method thereof for establishing an intellectual property right trade based on a block chain without using a central server.

### [Technical Solution]

In order to achieve the above object, the present invention provides an intellectual property trade system using a block chain, characterized in that it comprises at least one trader terminal connected to a block chain network in which trade information on at least one intellectual property rights subject to a trade is stored; and
a control server comprising a trade intermediary unit that mediates trades on the intellectual property rights and stores blocks including trade information on the intellectual property rights in the block chain network and a currency issuing unit that issues a preset quantity of cryptocurrency at a unit price determined by a person who has the authority to sell or lease the intellectual property rights and a currency trade brokerage unit that brokers trades for the issued cryptocurrency and a revenue distribution unit for distributing and calculating the revenue generated from the intellectual property rights that is the target of the trade by the number of holdings compared to the total number of issued cryptocurrencies to the holders of the cryptocurrency.

According to one embodiment, the trader terminal comprises a seller's terminal for transferring or licensing out the intellectual property, a buyer's terminal for transferring or licensing in the intellectual property, and a currency holding terminal for holding the cryptocurrency.

According to one embodiment, the currency issuing unit issues different types of cryptocurrencies for each of the intellectual property rights.

According to one embodiment, the control server further comprises a right checking unit that confirms and approves the right or qualification of selling or lending with respect to the intellectual property that is the target of the trade.

According to one embodiment, the right checking unit confirms consent with the electronic signature of the pledgee and/or licensee of the intellectual property right to be traded, or is connected to the National Intellectual Property Office server to determine whether the intellectual property subject to the trade is a currently valid right or the current right holder of the intellectual property right confirms whether the seller or lender is the same person, and performs the confirmation and approval process, and when the control server does not approve the authority or qualification of sale or rental through the confirmation and approval process, the trade is not established through the trade intermediary unit.

According to one embodiment, the control server further comprises; a value evaluation unit that evaluates the value of the intellectual property rights and provides an evaluation result upon request; and
the currency trade brokerage unit providing the cryptocurrency trade party with whether or not there has been an evaluation of the intellectual property rights at the time of issuing the cryptocurrency.

According to one embodiment, the valuation unit automatically changes the value initially evaluated for the intellectual property rights based on the remaining duration of time and stock price information by industry for the technical field of the intellectual property rights. According to one embodiment, the currency trade brokerage unit exchanges between different types of cryptocurrencies, and when exchanging the first and second cryptocurrencies of different types according to the market price, in the process of exchanging the first cryptocurrency with the second cryptocurrency, a reference cryptocurrency is used as a medium, and the value of the reference cryptocurrency is linked to the value of real currency.

The present invention provides an operating method of an intellectual property trade system using a block chain, characterized in that it comprises
providing a block chain network in which trade information on at least one intellectual property right to be traded is stored, wherein the block chain network is connected to at least one trader terminal;
issuing, by the control server, a preset quantity of cryptocurrency having a unit price determined by a person having the right to sell or lease the intellectual property rights; mediating, by the control server, a trade for the intellectual property right or the cryptocurrency; and
a revenue distribution step in which the control server distributes and calculates the revenue generated from the intellectual property rights, the target of the trade, by the number of holdings compared to the total number of issued cryptocurrencies to the cryptocurrency holders.

And the present invention provides a computer-readable recording medium for recording a computer program for executing the operating method of the intellectual property trade system using the block chain according to above present invention.

### [Advantageous Effects]

According to the present invention, since intellectual property trades are made based on block chains, it is easy to prevent data forgery, prevent hackers from hacking, ensure transparent trades and manage trade history, and because e-commerce is implemented without a central server, it is possible to verify the security and trade establishment according to the trade, and it has the effect of lowering the trade cost.

In addition, according to the present invention, by registering intellectual property rights in the trading system and trading issued cryptocurrencies, intellectual property owners can easily enter the investment market and provide a platform for investors to generate profits through intellectual property rights. In addition, cryptocurrencies used as a means of intellectual property trade can be exchanged for other cryptocurrencies, by exchanging a standard cryptocurrency that is linked to the value of real currency with low volatility during exchange, it can serve as a buffer for value fluctuations that may occur during the cryptocurrency exchange process.

In addition, according to the present invention, by performing the process of confirming and approving the rights or vigilance of the licensor or lender required for the transfer of intellectual property rights, there is an effect that can prevent trade by non-rights in advance.

In addition, according to the present invention, the cost that may occur due to repeated evaluation of the value of the intellectual property can be reduced by automatically changing the initially evaluated value of the intellectual property to be traded based on predetermined information.

### [Description of Drawings]

Figure 1 is a block diagram of an e-commerce system for centralized intellectual property rights.
Figure 2 is a block diagram of a block chain network according to an embodiment of the present invention.
Figure 3 is a block diagram of an intellectual property trade system using a block chain according to an embodiment of the present invention.
Figure 4 is a block diagram of a control server according to an embodiment of the present invention.
Figure 5 is a diagram for explaining a process of exchanging cryptocurrency for another cryptocurrency according to an embodiment of the present invention.
Figure 6 is a step-by-step flowchart of a method of operating an intellectual property trade system using a block chain according to an embodiment of the present invention.

### [Mode for Invention]

Hereinafter, the embodiments disclosed in the present specification will be described in detail with reference to the accompanying drawings, but the same or similar components are assigned the same reference numerals regardless of reference numerals and overlapping descriptions thereof will be omitted. The suffixes "module" and "part" for the components used in the following description are given or mixed in consideration of only the ease of writing the specification, and do not have distinct meanings or roles by themselves. In addition, in describing the embodiments disclosed in the present specification, if it is determined that detailed descriptions of related known technologies may obscure the gist of the embodiments disclosed in the present specification, the detailed description thereof will be omitted. In addition, the accompanying drawings are only for easy understanding of the embodiments disclosed in the present specification, and the technical feature disclosed herein is not limited by the accompanying drawings, and all changes, equivalents or substitutes should be understood to be included in the scope of the present invention.

Terms including an ordinal number, such as first, second, etc., may be used to describe various elements, but the elements are not limited by the terms.

The above terms are used only for the purpose of distinguishing one component from another.

When a component is referred to as being "connected" or "accessed" to another component, it should be understood that the other component may be directly connected or accessed to the other component, but other components may exist in between. On the other hand, when it is said that a certain element is "directly connected" or "directly accessed" to another element, it should be understood that no other element is present in the middle.

The singular expression includes the plural expression unless the context clearly dictates otherwise.

In this specification, it should be understood that terms such as "comprises" or "have" are intended to designate that the features, numbers, steps, operations, components, parts, or combinations thereof described in the specification exist, but does not preclude the possibility of addition or existence of one or more other features or numbers, steps, operations, components, parts, or combinations thereof.

### Intellectual Property Trade System

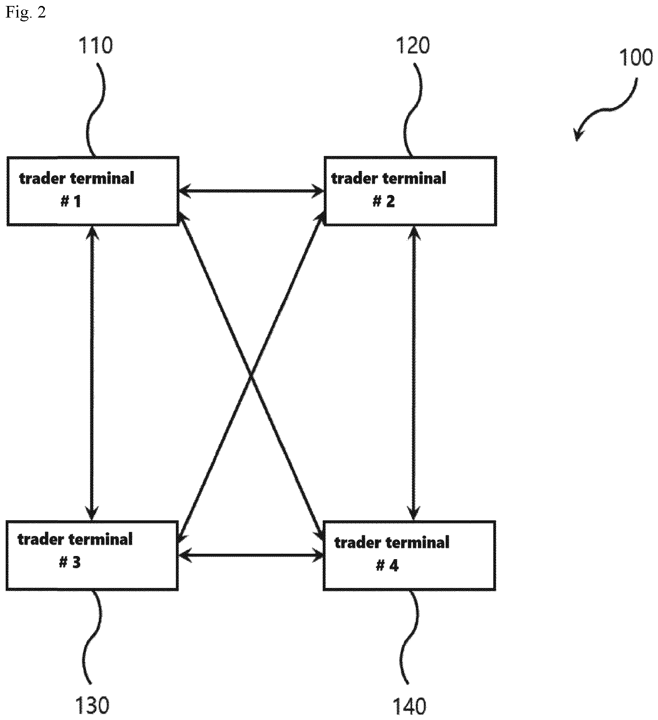

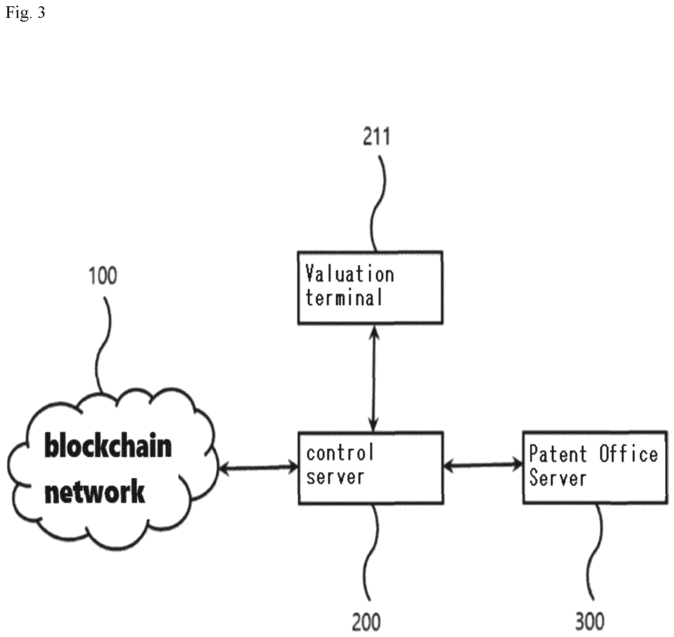

Figure 2 is a block diagram of a block chain network according to an embodiment of the present invention, and FIG. 3 is a block diagram of an intellectual property trade system using a block chain according to an exemplary embodiment of the present invention.

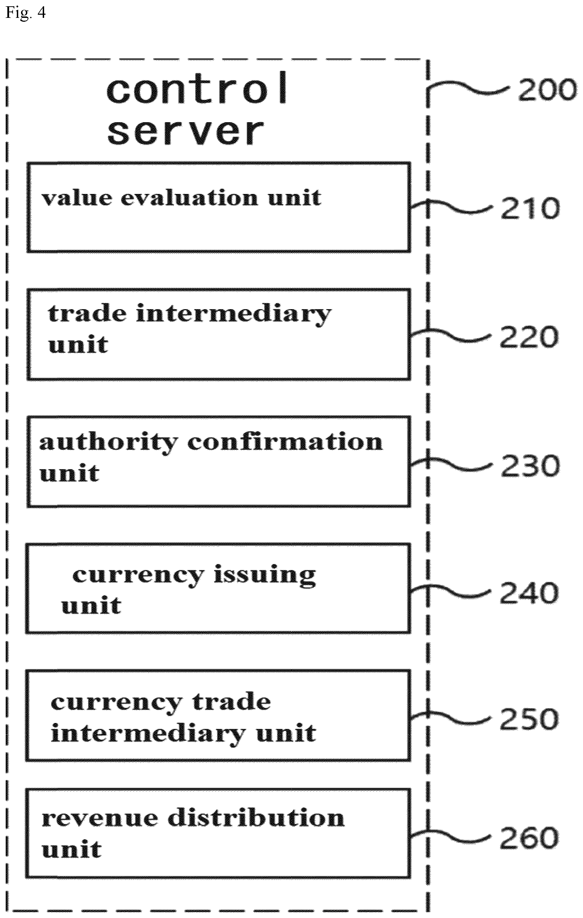

As shown in FIGS. 2 and 3, an intellectual property trade system using a block chain according to an embodiment of the present invention may comprise at least one trader terminal (110 - 140) connected to a block chain network, and a control server (200) that operates the block chain network for the trade of intellectual property rights, as shown in FIG. 4, the control server (200) may comprise a trade intermediary unit (220) that mediates trade for intellectual property rights and stores blocks comprising trade information on intellectual property rights in a block chain network; and a currency issuing unit (240) that issues a preset quantity of cryptocurrency at a unit price determined by a person who has the right to sell or lease intellectual property rights; and a currency trade intermediary unit (250) that mediates trade for the issued cryptocurrency, and a revenue distribution unit (260) for distributing and calculating the revenue generated from the intellectual property rights by the number of holdings compared to the total number of issued cryptocurrencies to the holder of the cryptocurrency.

According to the present invention, since intellectual property trades are made based on the block chain, there are effects of preventing data forgery, preventing hackers from hacking, ensuring transparent trades, and managing trade history easily.

In addition, according to the present invention, platform can be provided. by issuing cryptocurrency corresponding to intellectual property rights and allowing issued cryptocurrencies to be traded, intellectual property owners can easily enter the investment market and investors generate profits through intellectual property rights. In the intellectual property trade system according to the present invention, as shown in FIG. 2, a plurality of trader terminals (110 - 140) deviate from the existing centralized data exchange method (see FIG. 1) and data is stored in blocks and connected in a chain form, and it can be replicated and distributed to nodes (eg, terminals, storage, etc.) that are participants connected on the network for storage. In this way, the trade history is sent to all users participating in the trade without keeping trade records in the centralized central server (1), in each trade, all trade participants share information and collate it to prevent data forgery or falsification. The components shown in FIGS. 2 to 4 are not essential, so it goes without saying that an intellectual property trade system or a control server having more or fewer components than that may be implemented.

Hereinafter, each component will be described.

In the block chain network (100) shown in FIG. 2, a plurality of trader terminals (110 - 140) may be connected to each other as nodes, as shown in FIG. 3, a control server (200) may be further connected to the block chain network (100), here, the control server 200 may be connected as a participant on the block chain network, but is not limited thereto, and may be connected so as to be able to communicate with a general node rather than a participant on the block chain network.

The trader terminals (110 - 140) are terminals operated by a person who intends to trade on intellectual property rights, it may comprise the seller's terminal used to transfer or license out the intellectual property rights to which the user has the right, and the buyer's terminal used to acquire or license in intellectual property rights with a trade subscription. In this specification, the terms transfer and sale, transfer and purchase, license out and lease, and licensee and borrow are used interchangeably. When the seller or lender with the right to intellectual property rights uploads the intellectual property right to the control server (200) using the seller terminal, the control server (200), specifically the trade intermediary unit (220), posts the intellectual property rights with the trade subscription through a bulletin board, etc., the purchaser or borrower may accept the trade using the buyer's terminal, thereby establishing a trade on the intellectual property rights subject to the trade.

In addition, the trader terminals (110 - 140) participating in the block chain network (100) may have a platform that supports the block chain to enable direct trades between peer-to-peer in a distributed environment, to this end, it may have a storage space for storing applications or trade information for use of the block chain, and through this, the seller terminal and the buyer terminal can make a direct trade without using the control server (200).

To this end, the block may comprise information on the intellectual property rights to be traded and the conditions for the trade in the form of an electronic catalog, because these electronic catalogs describe the conditions for making a trade, if the buyer or borrower accepts these conditions, the contract can be established immediately.

By creating a smart contract between the seller's terminal and the buyer's terminal in this way, a safe trade can be made quickly and inexpensively between trade parties. The trader terminals (110 - 140) are connected to be able to communicate with another trader terminal (110 - 140), as described above, the types of the plurality of trader terminals (110 - 140) are not limited as long as they can form a block chain network, for example, the trader terminals (110 - 140) comprise mobile phones, smart phones, laptop computers, digital broadcasting terminals, personal digital assistants (PDAs), portable multimedia players (PMPs), and slate PCs, a mobile terminal such as a tablet PC, an ultrabook, or the like, or a fixed terminal such as a digital TV or a desktop computer.

On the other hand, the trader terminals (110 - 140) may further comprise a cryptocurrency seller terminal and a cryptocurrency purchaser terminal operated by parties who trade cryptocurrency issued in response to intellectual property rights.

A person who has authority for cryptocurrency makes an offer to sell through the control server (200), specifically, the currency trade intermediary unit (250) using the cryptocurrency seller terminal, and with respect to the cryptocurrency that has been put up for sale in the trading market, the buyer of the cryptocurrency makes an offer to purchase through the control server (200), specifically the currency trade brokerage unit 250, and so the currency trade intermediary unit (250) may allow a trade to be made when there is an offer for the same sale and purchase for the same type of cryptocurrency.

As a result, the currency trade intermediary unit 250 allows the sale and purchase of various types of cryptocurrency to be made, so that the cryptocurrency in which the trade is formed may have a market price.

Of course, as described above, the trader terminals (110 - 140) participating in the block chain network (100) may comprise a cryptocurrency seller terminal and a cryptocurrency purchase terminal, and through this, the cryptocurrency seller terminal and the cryptocurrency purchase terminal can make a direct trade without using the control server (200).

The block may comprise information about the target cryptocurrency and the conditions for the trade in the form of an electronic catalog, because these electronic catalogs describe the conditions for making a trade, if the buyer or borrower accepts these conditions, the contract can be established immediately.

By creating a smart contract between the crypto-currency seller terminal and the crypto-currency purchase terminal in this way, it is possible to enable fast and secure trade between trade parties at low cost.

The control server (200) is a device for operating the block chain network (100), and may mediate trade for intellectual property rights and/or cryptocurrency.

As shown in FIG. 4, the control server may comprise a value evaluation unit (210) that evaluates the value of intellectual property rights and a trade intermediary unit (220) that mediates trades on the intellectual property rights, a currency issue unit (240) that issues cryptocurrency corresponding to the intellectual property rights, and a currency trade intermediary unit (250) that mediates trades for the issued cryptocurrency, and a revenue distribution unit (260) for distributing and calculating the revenue generated through the intellectual property rights according to the stake held in cryptocurrency.

The value evaluation unit (210) is a means for evaluating the value of intellectual property rights, and the value of intellectual property rights can be automatically calculated according to a preset method, the present invention does not specifically limit the method of evaluating the value of intellectual property rights, but according to an embodiment, using the economic life of technology, sales, free cash flow, discount rate, technology contribution, etc., the specific value can be calculated according to the profit approaching method.

Alternatively, as shown in FIG. 3, the value evaluation unit (210) may calculate the final value using the evaluation value received from at least one value evaluation terminal (211) connected to the control server (200).

The value evaluation terminal (211) receives the value evaluated by a person who can evaluate the value of the intellectual property and transmits it to the value evaluation unit (210), or as described above, the value automatically calculated according to various preset value evaluation methods may be transmitted to the value evaluation unit (210).

The value evaluation unit (210) may calculate the final value of the values received from the plurality of value evaluation terminals (211) using methods such as a minimum value, a maximum value, a simple average, and a weighted average, in the case of using a weighted average as an example, it is preferable that the weight applied to the value evaluated by each value evaluation terminal (211) conforms to the hit ratio for the pre-established trade price, specifically, it is preferable to apply a high weight to the value evaluated by the evaluator who presented the similar evaluation value using the similarity indicating the difference between the price of the previously concluded trade and the evaluation value presented at that time. According to an embodiment of the present invention, when registering the intellectual property rights to be traded with the trade intermediary unit (220), it is possible to apply for value evaluation of the intellectual property rights, and accordingly, the value evaluation unit (210) may evaluate the value of the corresponding intellectual property rights.

Valuation is not an essential item for intellectual property trades, but when cryptocurrency is issued, whether the value of the corresponding intellectual property has been evaluated may be provided to the parties to the cryptocurrency trade and/or the party to the intellectual property trade.

The value of intellectual property rights can be determined by the market according to the corresponding cryptocurrency trade, but by providing the evaluation value provided by the valuation institution to the parties to the cryptocurrency and/or intellectual property rights trade, it is possible to provide a standard that can give the trading parties a sense of trust in the trade.

The trade intermediary unit (220) may provide an intellectual property trading platform between a seller or a lender and a buyer or borrower so that a trade can be made, and a block comprising trade information on intellectual property rights may be stored in the block chain network (100). Here, the trade information may include a trade party, a trade target [unique identification information on intellectual property rights (country and application number or publication number, etc.)], trade value, trade period, etc.

As described above, according to one embodiment, by creating a smart contract between the seller's terminal and the buyer's terminal without going through the control server (200), the trade of intellectual property rights can enable a fast and secure trade between the trade parties at a low cost.

However, before storing the block comprising the trade information in the block chain network (100), the control server (200) (or the trade intermediary unit (220)) according to an embodiment of the present invention may perform the process of confirming and approving the rights or qualifications of the seller or lender with respect to the intellectual property rights subject to the trade.

As shown in FIG. 3, the control server (200) is communicatively connected with the National Intellectual Property Office server (300) operated by each country's patent office, and by using the National Intellectual Property Office server (300), it is possible to perform the above confirmation and approval procedures for the target intellectual property rights.

Specifically, because a seller who intends to sell intellectual property rights needs the consent of the pledgee and/or the licensee of the intellectual property right to be traded, the control server (200) may obtain personal information of the pledgee and the licensee for the corresponding intellectual property right and may obtain consent from the pledgee and/or the licensee through an electronic signature. Although not shown in the drawing, the control server 200 (or the trade intermediary unit 220) induces access from the pledgee and/or licensee, and the consent to transfer from the connected pledgee and/or licensee can be confirmed with an electronic signature.

In addition, the control server (200) may use the National Intellectual Property Office server (300) to check whether the seller or lender is a legitimate right holder with respect to an intellectual property right to be traded. The control server (200) may request and receive registration register information for the intellectual property rights from the National Intellectual Property Office server (300), and may check whether the seller or lender is the same as the right holder that can be sold or rented on the registration register with respect to the corresponding intellectual property right, and may perform the confirmation and approval procedure. If the control server (200) does not confirm that the seller or lender is a party right holder through the above confirmation and approval process, or if all consent is not obtained from the pledgee and/or the licensee, it is possible to secure the stability of the trade, by preventing the trade from being made through the trade intermediary unit (220).

On the other hand, a person having the right to intellectual property rights may register with the control server (200) for a trade, and in this case, the currency issuing unit (240) may issue cryptocurrency corresponding to the registered intellectual property rights.

The issued cryptocurrency may have different types for each intellectual property right, and the number of issued cryptocurrency is specified at the time of initial issuance of the cryptocurrency, but the unit price of the issued cryptocurrency may be determined by a person who has authority over the intellectual property rights. In other words, when putting an intellectual property right on the market, the seller can set the value of the intellectual property right for himself. At this time, the issued cryptocurrency may be issued in the form of "[currency name]@[intellectual property name]".

The currency trade intermediary unit (250) may provide a trading platform to sell and buy cryptocurrencies, and eventually, the value of intellectual property rights may be naturally formed by the market. That is, investors can make investments in intellectual property rights by holding cryptocurrency for intellectual property rights. The currency trade intermediary unit (250) may also store a block comprising trade information for cryptocurrency in the block chain network (100). Here, the trade information may comprise a trade party, a trade target (type and number of cryptocurrency), a trade unit price, a trade period, and the like.

According to one embodiment, the trade of cryptocurrency also creates a smart contract between the cryptocurrency seller terminal and the cryptocurrency buyer terminal without going through the control server 200, so that a safe trade can be made between the parties to the trade quickly and at a low cost.

When the intellectual property rights are traded by the trade intermediary unit (220), or when profits are generated by the intellectual property rights in other ways, the revenue distribution unit (260) distribution unit may distribute the revenue to the person who owns the cryptocurrency corresponding to the intellectual property right by the proportion of the stake in the cryptocurrency with respect to the revenue. That is, the investor can recover the investment by receiving a portion of the profits generated from the intellectual property rights.

In this case, a person who operates the control server (200) may acquire a fee according to a predetermined standard such as a fixed amount or a fixed rate when a trade for intellectual property rights or cryptocurrency occurs.

On the other hand, the value evaluation of the intellectual property rights of the value evaluation unit (210) according to an embodiment of the present invention may be performed when a seller or a lender requests it, but when the value evaluation is frequently performed according to a request, there is a problem in that the time required for the value evaluation is unnecessarily increased due to a load on the value evaluation, or the cost increases due to the repeated value evaluation.

However, although the value of intellectual property changes over time due to marketability, economic feasibility, business feasibility, and rights, there is also a problem that the value of intellectual property does not reflect the above fluctuation due to the above problems.

Accordingly, the value evaluation unit (220) according to an embodiment of the present invention may vary the value initially evaluated by the value evaluation unit (210) for the target intellectual property rights based on the remaining duration and stock price information by industry over time. These two parameters, the remaining duration and stock price information by industry, are quantitative indicators that do not require qualitative evaluation among factors considered for value evaluation and can be applied immediately, so they can be directly reflected in the value over time.

Residual duration is the remaining life span of intellectual property rights at the present time, and is a factor for the right itself regardless of who has the right to sell or lease, industry-specific stock price information is as an indicator that can indicate the value of the current technical field of the relevant intellectual property rights rather than the direct value of individual intellectual property rights, the stock price information by industry for the relevant technical field can be received by requesting it from a bank server or a securities server. The industry is not particularly limited, but may be semiconductors, automobiles, cosmetics, pharmaceuticals, shipbuilding, food, IT services, communication equipment, etc. according to the classification provided by the bank server or securities server.

The method of applying the residual duration and stock price information by industry to the value evaluated for intellectual property rights is not particularly limited, but, for example, it can be multiplied by a ratio compared to the residual duration and stock price information by industry at the time of initial valuation.

On the other hand, although not shown in the drawing, in order to broker a trade for intellectual property rights, the control server may include a currency storage unit capable of storing at least one type of cryptocurrency, and cryptocurrency can be stored as needed, and the stored cryptocurrency can be used as a payment method when brokering intellectual property rights and/or cryptocurrency trades.

In addition, the value storage unit stores cryptocurrencies, and some of the stored cryptocurrencies can be credited to the participants of the blockchain network, and the cryptocurrencies accumulated by the participants can be converted into existing real currency or other types of cryptocurrencies.

On the other hand, according to an embodiment of the present invention, the currency trade intermediary unit (250) may exchange currency between different types of cryptocurrency or between cryptocurrency and real currency for payment of a trade price and the like.

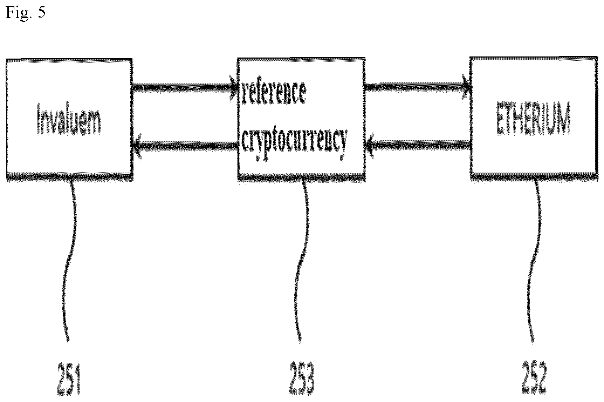

However, since the value of cryptocurrencies changes frequently when exchanging between cryptocurrencies, according to an embodiment of the present invention, as shown in FIG. 5, using the reference cryptocurrency (253) as a mediator in the exchange trade between the first cryptocurrency (251) and the second cryptocurrency (252), which are different types, the first cryptocurrency (251) is converted into the reference cryptocurrency ( 253 ), and then the converted reference cryptocurrency (253) may be converted into the second cryptocurrency (252).

Here, the reference cryptocurrency (253) is stored in the value storage unit according to an embodiment of the present invention, and it is desirable to make the value linked to the value of real currency, so that the value fluctuation is significantly lower than that of the normal cryptocurrency.

Real currency corresponding to the value of the reference cryptocurrency may be deposited in a bank operating a bank server (not shown) in order to secure stability against the fluctuation of the value of the reference cryptocurrency. In other words, real currency such as money or gold corresponding to the value of the reference cryptocurrency may be deposited in a bank so that the fluctuation of the value of the reference cryptocurrency depends on the fluctuation of the value of the real currency deposited in the bank.

To this end, the bank server provides information on the value corresponding to real money deposited in real time or periodically in the value storage unit, and the value storage unit may set the value of the reference cryptocurrency based on the real currency value provided from the bank server and interwork them.

### Method of operating the intellectual property trading system

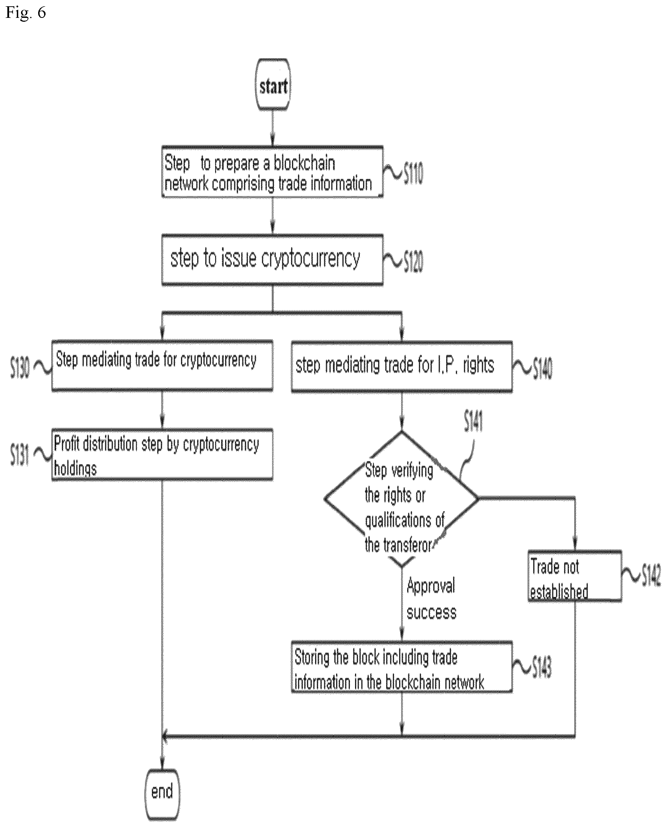

Figure 6 is a step-by-step flowchart of a method of operating an intellectual property transaction system using a block chain according to an embodiment of the present invention.

As shown in FIG. 6, the method of operating an intellectual property transaction system using a block chain according to an embodiment of the present invention comprises
step (S110) of providing a block chain network (100) in which trade information on at least one intellectual property right to be traded is stored,
step (S120) of issuing, by the control server (200), a preset quantity of cryptocurrency having a unit price determined by a person having the right to sell or lease the intellectual property rights,
step (S130, S140) of mediating, by the control server (200), a trade for the intellectual property right or the cryptocurrency and
a revenue distribution step (S 131) in which the control server (200) distributes and calculates the revenue generated from the intellectual property rights, the target of the trade, by the number of holdings compared to the total number of issued cryptocurrencies to the cryptocurrency holders.

In this way, a platform is provided that intellectual property owners can easily enter the investment market and investors generate profits through intellectual property rights as the value of intellectual property rights corresponding to the cryptocurrency traded through the cryptocurrency trading market can be formed, and through the revenue distribution step (S131), intellectual property rights are registered in the transaction system, and corresponding cryptocurrencies are issued and traded, and distributing profits from intellectual property rights according to the stake in cryptocurrency.

According to an embodiment, in the step of issuing cryptocurrency ( S120 ), different types of cryptocurrency may be issued for each intellectual property right.

According to an embodiment, in the step (S130) of brokering a transaction for cryptocurrency, it is possible to provide trust to the transaction party by providing the cryptocurrency transaction party with whether or not there was an evaluation of intellectual property rights when the cryptocurrency is issued.

According to an embodiment, the control server (200) may further comprise a step (S141) of confirming and approving the authority or qualification of the seller or the lender with respect to the intellectual property right, which is the target of the transaction, wherein in step S141, the control server (200) checks whether the agreement is made with the electronic signature of the pledgee and/or the licensee of the target intellectual property right, or the control server (200) is connected to the National Intellectual Property Office server (300) to check whether the intellectual property right to be traded is a currently valid right or whether the current right holder of the intellectual property right is the same as the seller or lender, so that the confirmation and approval process can be performed. If the authority or qualification of the seller or lender is not approved through the step (S141), the transaction may be made non-established through the transaction intermediary unit (220) (S142).

According to an embodiment, after the initial value is made by the value evaluation unit (210) for the target intellectual property rights, to solve problems that may arise from repeated valuations, it is preferable that the initially evaluated value be automatically changed based on the remaining duration and stock price information by industry over time.

In addition, according to an embodiment, the cryptocurrency used for intellectual property transaction may be exchanged for another type of cryptocurrency by the currency transaction intermediary unit (250), when exchanging the first cryptocurrency (251) for trading intellectual property rights with the second cryptocurrency (252) according to the market price, through the reference cryptocurrency (253) during the exchange process, the first cryptocurrency (251) can be exchanged for the reference cryptocurrency (253) and the reference cryptocurrency 253 for the second cryptocurrency (252) . In this case, the reference cryptocurrency (253) may have its value linked to the value of real currency.

Since the description of each step of the operation method of the intellectual property transaction system using the block chain overlaps with the description of the intellectual property transaction system using the block chain, a detailed description will be omitted and will be replaced therewith.

### Computer readable recording medium

The method of operating an intellectual property transaction system using a block chain according to an embodiment of the present invention described above is implemented in the form of program instructions that can be executed through various computer components and so recorded in a computer-readable recording medium.

The computer-readable recording medium may comprise program instructions, data files, data structures, etc. alone or in combination. The program instructions recorded on the computer-readable recording medium may be specially designed and configured for the present invention or may be known and available to those skilled in the computer software field. Examples of the computer-readable recording medium include hard disks, magnetic media such as floppy disks and magnetic tapes, optical recording media such as CD-ROMs and DVDs, and magneto-optical media such as floppy disks and hardware devices specially configured to store and execute program instructions, such as ROM, RAM, flash memory, and the like. Examples of program instructions comprise not only machine code such as generated by a compiler, but also high-level language code that can be executed by a computer using an interpreter or the like. The hardware device may be configured to operate as one or more software modules to perform processing according to the present invention, and vice versa.

As above, preferred embodiments of the present invention have been described in detail with reference to the drawings. The description of the present invention is for illustration, and those of ordinary skill in the art to which the present invention pertains will understand that it can be easily modified into other specific forms without changing the technical spirit or essential features of the present invention.

Accordingly, the scope of the present invention is indicated by the claims described later rather than the detailed description, and all changes or modifications derived from the meaning, scope, and equivalent concept of the claims should be construed as being included in the scope of the present invention.

**[Explanation of code]**

| | | | |
|---|---|---|---|
| 1: | Central server | 11~14: | Trader terminal |
| 100: | block chain network | 110~140: | trader terminal |
| 200: | control server | 210: | value evaluation unit |
| 220: | trade intermediary unit | 230: | authority confirmation unit |
| 240: | currency issuing unit | 250: | currency trade intermediary unit |
| 260: | revenue distribution unit | 251: | first cryptocurrency |
| 252: | second cryptocurrency | 253: | reference cryptocurrency |
| 300: | Patent Office Server | | |

## Claims

1. An intellectual property trade system using a block chain, **characterized in that** it comprises at least one trader terminal connected to a block chain network in which trade information on at least one intellectual property rights subject to a trade is stored; and
a control server comprising a trade intermediary unit that mediates trades on the intellectual property rights and stores blocks including trade information on the intellectual property rights in the block chain network and a currency issuing unit that issues a preset quantity of cryptocurrency at a unit price determined by a person who has the authority to sell or lease the intellectual property rights and a currency trade brokerage unit that brokers trades for the issued cryptocurrency and a revenue distribution unit for distributing and calculating the revenue generated from the intellectual property rights that is the target of the trade by the number of holdings compared to the total number of issued cryptocurrencies to the holders of the cryptocurrency.

2. The intellectual property trade system of claim 1, wherein the trader terminal comprises a seller's terminal for transferring or licensing out the intellectual property, a buyer's terminal for transferring or licensing in the intellectual property, and a currency holding terminal for holding the cryptocurrency.

3. The intellectual property trade system of claim 1, wherein the currency issuing unit issues different types of cryptocurrencies for each of the intellectual property rights.

4. The intellectual property trade system of claim 1, wherein the control server further comprises an authority confirmation unit that confirms and approves the right or qualification of selling or lending with respect to the intellectual property that is the target of the trade.

5. The intellectual property trade system of claim 4, wherein the right checking unit confirms consent with the electronic signature of the pledgee and/or licensee of the intellectual property right to be traded, or is connected to the National Intellectual Property Office server to determine whether the intellectual property subject to the trade is a currently valid right or the current right holder of the intellectual property right confirms whether the seller or lender is the same person, and performs the confirmation and approval process, and when the control server does not approve the authority or qualification of sale or rental through the confirmation and approval process, the trade is not established through the trade intermediary unit.

6. The intellectual property trade system of claim 1, wherein the control server further comprises; a value evaluation unit that evaluates the value of the intellectual property rights and provides an evaluation result upon request; and
the currency trade brokerage unit providing the cryptocurrency trade party with whether or not there has been an evaluation of the intellectual property rights at the time of issuing the cryptocurrency.

7. The intellectual property trade system of claim 1, wherein the valuation unit automatically changes the value initially evaluated for the intellectual property rights based on the remaining duration of time and stock price information by industry for the technical field of the intellectual property rights.

8. The intellectual property trade system of claim 1, wherein the currency trade brokerage unit exchanges between different types of cryptocurrencies, and when exchanging the first and second cryptocurrencies of different types according to the market price, in the process of exchanging the first cryptocurrency with the second cryptocurrency, a reference cryptocurrency is used as a medium, and the value of the reference cryptocurrency is linked to the value of real currency.

9. An operating method of an intellectual property trade system using a block chain, **characterized in that** it comprises
providing a block chain network in which trade information on at least one intellectual property right to be traded is stored, wherein the block chain network is connected to at least one trader terminal;
issuing, by the control server, a preset quantity of cryptocurrency having a unit price determined by a person having the right to sell or lease the intellectual property rights;
mediating, by the control server, a trade for the intellectual property right or the cryptocurrency; and
a revenue distribution step in which the control server distributes and calculates the revenue generated from the intellectual property rights, the target of the trade, by the number of holdings compared to the total number of issued cryptocurrencies to the cryptocurrency holders.

10. A computer-readable recording medium for recording a computer program for executing the operating method of the intellectual property trade system using the block chain according to claim 9.
